(19) Europäisches Patentamt
European Patent Office
Office européen des brevets

(11) **EP 1 992 399 A1**

(12) **EUROPEAN PATENT APPLICATION**
published in accordance with Art. 158(3) EPC

(43) Date of publication:
**19.11.2008 Bulletin 2008/47**

(51) Int Cl.:
*B01D 63/00* (2006.01)    *B01D 63/02* (2006.01)
*C09J 201/00* (2006.01)

(21) Application number: **06843319.2**

(22) Date of filing: **26.12.2006**

(86) International application number:
**PCT/JP2006/325935**

(87) International publication number:
**WO 2007/077833 (12.07.2007 Gazette 2007/28)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2005 JP 2005378842**

(71) Applicant: **Kureha Corporation Tokyo 103-8552 (JP)**

(72) Inventors:
• **TADA, Yasuhiro**
**c/o Polymer processing & product research lab., Omitama-shi, Ibaraki 311-3436 (JP)**

• **HINO, Masayuki**
**c/o Polymer processing & product research lab., Omitama-shi, Ibaraki 311-3436 (JP)**
• **EBIHARA, Yasushi**
**c/o Polymer processing & product research lab., Omitama-shi, Ibaraki 311-3436 (JP)**
• **MIZUNO, Toshiya**
**c/o Polymer processing & product research lab., Omitama-shi, Ibaraki 311-3436 (JP)**

(74) Representative: **Kortekaas, Marcel C.J.A.**
**Exter Polak & Charlouis B.V.**
**Postbus 3241**
**2280 GE Rijswijk (NL)**

(54) **POTTING MATERIAL, HOLLOW-FIBER MODULE, AND PROCESS FOR PRODUCING THE SAME**

(57) An object of the present invention is to provide a potting agent that enables the reduction of crawling and ensures sufficient penetration between the porous hollow fibers in stationary potting. The potting agent of the present invention is a potting agent for fixing an end portion of a porous hollow fiber group composed of a plurality of porous hollow fibers, and contains a resin material and a filler. The content of the filler is equal to or less than the content of the filler at a rising point of a variation curve of viscosity of the potting agent to filler content.

**Fig.5**

## Description

## Technical Field

The present invention relates to a potting agent for fixing an end portion of a porous hollow fiber group composed of a plurality of porous hollow fibers, a hollow fiber module, and a method for manufacturing same.

## Background Art

A hollow fiber module is a filtration device suitable for precision filtration or ultrafiltration using hollow fibers (hollow fiber membrane), and such modules have been expected to find application in the field of water purification or the like. A hollow fiber module that has a configuration in which a bundle of porous hollow fibers is introduced into a cylindrical container (housing) is known (see Patent Document 1). Further, a flat (screen-shaped) hollow fiber module with a configuration in which a plurality of porous hollow fibers are arranged side by side in a screen-like fashion is also known (see Patent Document 2). In these hollow fiber modules, a porous hollow fiber group composed of a plurality of hollow fibers is typically fixed (potted) by both end portions thereof inside the housing or a predetermined fixing container (cartridge head, see Patent Document 3) with a cured substance such as a resin material that is called a potting agent.

In the above-described hollow fiber module, porous hollow fibers on at least one end side of the module are open, and the filtration of the liquid to be treated is performed by taking out the filtrate that penetrated into the porous hollow fibers through a wall surface (membrane surface) thereof from the fiber openings. In this case, the liquid to be treated is often pressurized or the filtrate is sucked in to enhance the filtration process. In such cases, the aforementioned portion that has been subjected to potting (potting portion) is required to have excellent pressure resistance, durability, and liquid tightness, so as to withstand the applied pressure and suction. Thermosetting resins such as epoxy resins and urethane resins that have a high hardness and also excel in adhesivity have been used in the past as bonding agents satisfying these requirements.

Further, the following improvements of structure and material of the potting portion have been investigated in recent years from the standpoint of protecting the porous hollow fibers. Thus, when potting is performed with the conventional hard resin material, stresses are concentrated in the root portion where the porous hollow fibers are fixed. As a result, the porous hollow fibers tend to break (rupture) easily in this portion. Accordingly, an attempt has been made to relax the stresses applied to the root portion by employing a two-layer structure composed of a hard resin layer that fixes the end portions of the porous hollow fibers and a soft resin layer from a silicone resin or the like that covers the root portion (see Patent Document 4). Further, an attempt has also been made to ensure stress relaxation and improve properties such as pressure resistance at the same time by using an urethane resin with an appropriately adjusted hardness (see Patent Document 5).

Potting performed when a hollow fiber module is fabricated typically involves the steps of introducing end portions of porous hollow fibers into a predetermined container, filling the container with a potting agent, causing the potting agent to permeate in the end portions, and then curing the potting agent. However, in this process, the potting agent that permeated in the end portions of the porous hollow fibers in most cases crawls up to above the desired height between the hollow fibers due to a capillary phenomenon. Such crawling of the potting agent causes unnecessary reduction in the effective membrane area produced by the porous hollow fiber group, thereby decreasing the filtration efficiency with the hollow fiber module.

Further, when a potting portion having the above-described two-layer structure is formed, the potting agent for forming the lower layer crawls up. For this reason, the penetration of potting agent for forming the upper layer around the porous hollow fibers becomes insufficient. As a result, it is often impossible to obtain a sufficient stress relaxation effect from the upper soft layer.

Accordingly, in order to inhibit such crawling of the potting agent during potting, a method by which the end portions are filled with a potting agent, while the agent is being pushed aside, by centrifugal forces (centrifugal potting, centrifugal injection) has been studied as a replacement for the conventional method by which a potting agent is caused to permeate into the end portions of a stationary porous hollow fiber group (stationary potting). Further, the addition of a filling agent (filler) to a potting agent has been disclosed as effective means for causing the aforementioned stress relaxation and also imparting the potting portion with the desired strength (see Patent Documents 6, 7).

[Patent Document 1] Japanese Patent Application Laid-open No. 63-38884.
[Patent Document 2] Japanese Patent Application Laid-open No. 5-220357.
[Patent Document 3] Japanese Patent Application Laid-open No. 2003-24751.
[Patent Document 4] Japanese Examined Utility Model Application No. 63-30481.
[Patent Document 5] Japanese Patent Application Laid-open No. 2003-103146.
[Patent Document 6] Japanese Patent Application Laid-open No. 63-171607.
[Patent Document 7] Japanese Patent Application Laid-open No. 7-256063.

## Disclosure of the Invention

### Problems to be Solved by the Invention

In the aforementioned centrifugal potting, a hollow fiber module including the porous hollow fiber group in which the end portions have not yet been fixed has to be rotated. As a result, either the porous hollow fiber group has to be held or the rotation of the hollow fiber module has to be conducted in a precise manner in order to arrange and fix all the hollow fibers appropriately, these requirements greatly degrading the operability. Further, when a large hollow fiber module is manufactured by centrifugal potting, the apparatus used for potting has to be also increased in size, causing problems associated with decrease in productivity and increase in cost.

Therefore, from the standpoint of productivity, it is preferred that the potting be performed by the conventional stationary potting method, rather than the centrifugal potting method. The inhibition of the capillary phenomenon by increasing the viscosity of the potting agent can be considered as a method for resolving the above-described problem of crawling in stationary potting, but in this case it is difficult to cause the potting agent to penetrate sufficiently between the fibers constituting the porous hollow fiber group. As a result, incomplete fixing of the end portions of the porous hollow fiber group can easily occur.

With the foregoing in view, it is an object of the present invention to provide a potting agent that enables the reduction of crawling and ensures sufficient penetration between the porous hollow fibers in stationary potting. It is another object of the present invention to provide a method for manufacturing a hollow fiber module using such potting agent and also to provide a hollow fiber module.

### Means for Solving the Problem

In order to attain the above-described object, the present invention provides a potting agent for fixing an end portion of a porous hollow fiber group composed of a plurality of porous hollow fibers, the potting agent comprising: a resin material and a filler, wherein a content of the filler is equal to or less than a content of the filler at a rising point of a variation curve of viscosity of the potting agent to filler content (this content of the filler will be referred to hereinbelow as "a critical value of filler content with respect to a viscosity increasing effect").

The "variation curve of viscosity of the potting agent to filler content" as referred to herein is a curve representing changes in the value of potting agent viscosity corresponding to increase or decrease in the content of filler. For example, this curve is equivalent to a graph in which a value of potting agent viscosity (Pa·s) at each filler content is plotted against the filler content. The number of parts by mass of the filler per a total of 100 parts by mass of the resin material contained in the potting agent is employed herein as the "filler content".

The "rising point" as referred to herein is a point at which the slope of the variation curve becomes 20 Pa·s/ (part by mass) for the first time. For example, when a viscosity ($\eta$, units: Pa·s) is plotted with a predetermined spacing against the filler content (C, units: parts by mass), starting from 0 part by mass, where the slope $((\eta_{x+1} - \eta_x)/(C_{x+1} - C_x))$ between two adjacent points $((C_x, \eta_x)$ and $(C_{x+1}, \eta_{x+1})$; here, $C_x < C_{x+1}$, $\eta_x < \eta_{x+1})$ becomes equal to or higher than 20 Pa·s/(part by mass) for the first time, the medium point between these two points can be taken as the "rising point". In this case, the "predetermined spacing" of the filler content can be taken as 0.5 part by mass to 1.0 part by mass. Further, the "critical value of filler content with respect to a viscosity increasing effect" in this case is represented by $(C_{x+1} + C_x)/2$.

In a potting agent obtained by adding a filler to a resin material, the viscosity of the potting agent slowly increases proportionally to the volume ratio of the filler as long as the filler content is very small. However, where the filler content exceeds a certain predetermined value (the aforementioned "critical value of filler content with respect to a viscosity increasing effect") the viscosity increases rapidly. In the potting agent in accordance with the present invention, the filler content is equal to or less than "the critical value of filler content with respect to a viscosity increasing effect". Therefore, a low viscosity almost equal to that of the resin material is maintained. As a result, the potting agent in accordance with the present invention can sufficiently penetrate between the fibers in the porous hollow fiber group during potting, and the end portions of the porous hollow fiber group can be fixed effectively.

Further, with the potting agent in accordance with the present invention, crawling of the potting agent caused by a capillary phenomenon can be greatly inhibited, despite the fact that the viscosity is low and penetration ability is good. Reasons therefor are not clear, but the inventors have suggested the following explanation. Thus, where crawling of the potting agent occurs, the resin material contained in the potting agent is gradually absorbed by fine pores of the porous hollow fibers. By contrast, the filler that is a solid body is larger than the fine pores and, therefore, very difficult to absorb. For this reason, the filler content increases gradually as the potting agent crawls up. Where the filler content in the potting agent in which crawling has occurred exceeds the filler content at the above-described rising point, the viscosity of potting agent rapidly increases. As a result, subsequent crawling of the potting agent is inhibited. The above-described action is not necessarily limited to this suggested effect.

Further, the potting agent in accordance with the present invention may have the below-described specific form. Thus, it may be a potting agent for fixing an end portion of a porous hollow fiber group composed of a plurality of porous hollow fibers, the potting agent comprising a resin material and a filler, wherein a content of the filler is 0.01 to 5.00 parts by mass per 100 parts by mass of the resin material.

Because the potting agent has the filler content within the above-described range, it has a viscosity equal to or less than the aforementioned rising point. Therefore with such potting agent, sufficient penetration of the potting agent between the porous hollow fibers can be induced, while sufficiently inhibiting crawling during potting in the same manner as described above.

The filler contained in the potting agent in accordance with the present invention preferably has a mean particle size of 0.005 to 20 $\mu$m, more preferably 0.01 to 10 $\mu$m. The mean particle size of the filler as referred to herein is a mean particle size of filler particles when they are contained in the potting agent. In other words, for example, when the filler is contained in the form of primary particles in the potting agent, the aforementioned mean particle size is the mean particle size of primary particles, and when the filler is contained in the form of aggregates such as secondary particles, the mean particle size is the mean particle size of the aggregates. Where the mean particle size of the filler is equal to or more than 0.005 $\mu$m, the absorption of filler into porous hollow fibers during crawling of the potting agent can be prevented more reliably. As a result, the increase in viscosity of the potting agent caused by crawling proceeds more dramatically, and even better effect of preventing the crawling can be obtained. On the other hand, where the mean particle size exceeds 20 $\mu$m, the filler size becomes too large. As a result, the critical value of filler content related to the viscosity increasing effect increases, the variation curve rises slowly and therefore the effect of inhibiting the crawling tends to decrease.

It is also preferred that a curable resin material be used as the resin material. Where the resin material is a curable material, curing can be initiated after the end portions of the porous hollow fiber group are filled and the end portions can be fixed more effectively.

Further, it is preferred that the potting agent in accordance with the present invention have a viscosity during application to the porous hollow fiber group of 0.1 to 5.0 Pa·s. The "viscosity during application to the porous hollow fiber group" of the potting agent, as referred to herein, means the viscosity of the potting agent at the time it is used for potting, and more specifically the viscosity at the time the permeation to the porous hollow fiber group is initiated. By adjusting the viscosity of the potting agent within such a range, it is possible to improve further the penetration of the potting agent between the fibers in the porous hollow fiber group.

Further, the method for manufacturing a hollow fiber module in accordance with the present invention comprises a step of filling at least one end portion of a porous hollow fiber group composed of a plurality of porous hollow fibers with the potting agent in accordance with the present invention. With such a method for manufacturing a hollow fiber module, fixing (potting) of the end portions of the porous hollow fiber group is performed using the potting agent in accordance with the present invention. Therefore, sufficient penetration of the potting agent between the fibers of the porous hollow fiber group can be induced, while sufficiently inhibiting crawling of the potting agent. As a result, it is possible to obtain a hollow fiber module in which the end portions of the porous hollow fiber groups are effectively potted.

In the hollow fiber module in accordance with the present invention, at least one end portion of a porous hollow fiber group composed of a plurality of porous hollow fibers is fixed with a cured product of the potting agent in accordance with the present invention. In such hollow fiber module, the end portions of the porous hollow fiber group are fixed by a cured product of the potting agent in accordance with the present invention. Therefore, crawling of the potting agent is reduced, thereby ensuring sufficient membrane surface area. Moreover, because the spaces between the porous hollow fibers are sufficiently filled with the potting agent, the fixing portions excel in durability.

**Effects of the Invention**

In accordance with the present invention, it is possible to provide a potting agent in which crawling during stationary potting can be reduced and sufficient penetration between the porous hollow fibers can be ensured. Further, by using such a potting agent, it is possible to provide a hollow fiber module in which sufficient membrane surface area is ensured and which excels in durability, pressure resistance, and liquid tightness of the fixing portions of the porous hollow fiber group, and also a method for manufacturing such a hollow fiber module.

**Brief Description of the Drawings**

FIG. 1 is a perspective view, with a cut-out portion, illustrating the configuration of the hollow fiber module employing the potting agent of the preferred embodiment.
FIG. 2 illustrates schematically the cross-sectional configuration in the vicinity of the end portion on the treatment liquid injection side of the hollow fiber module.

FIG. 3 illustrates a process of manufacturing a sheet-shaped article in which a plurality of hollow fibers are arranged side by side.

FIG. 4 illustrates a process of coiling the sheet article composed of a plurality of hollow fibers arranged side by side.

FIG. 5 illustrates schematically the cross-sectional configuration in the vicinity of the end portion of the hollow fiber bundle inserted into a casing in the potting process.

FIG. 6 is a graph illustrating a variation curve of the viscosity of potting agent versus the filler content for the potting agent of Example 3.

**Explanation of Reference Numerals**

10...hollow fiber bundle, 10a...potting portion, 12...hollow fiber, 14...treatment liquid injection portion, 20...casing, 22...opening, 32, 34...concentrate take-out member, 32a, 34a,...take-out pipe, 42...treatment liquid injection member, 42a...injection portion, 44...filtrate take-out member, 44a...take-out portion, 100...hollow fiber module, 110...adhesive layer, 120...protective layer, 200...roll, 220...tube, 240...sealing member, 300... sheet-like article

**Best Mode for Carrying Out the Invention**

The preferred embodiment of the present invention will be described below with reference to the appended drawings. In the explanation of drawings, identical elements are assigned with identical reference numerals and redundant explanation thereof is omitted.

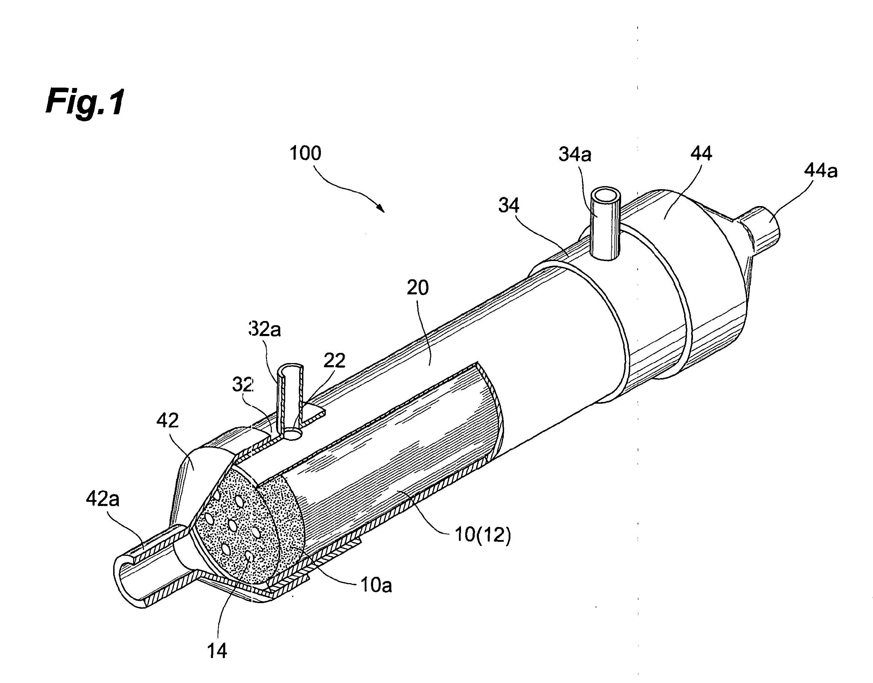

FIG. 1 is a perspective view, with a cut-out portion, illustrating the configuration of the hollow fiber module employing the potting agent of the preferred embodiment. A hollow fiber module 100 shown in FIG. 1 comprises a hollow fiber bundle (porous hollow fiber group) 10 in which a plurality of hollow fibers (porous hollow fibers) 12 are bundled, a cylindrical casing 20 surrounding the hollow fiber bundle 10, concentrate take-out members 32, 34 provided on the outer periphery on both end sides of the casing 20, and a treatment liquid injection member 42 and a filtrate take-out member 44 provided at respective ends of the casting 20. This module has the so-called cylindrical hollow fiber module configuration. In the hollow fiber module 100, the front side, as shown in the figure, is the treatment liquid injection side, and the rear side, as shown in the figure, is a filtrate take-out side.

Both end portions (the end portion on the filtrate take-out side is not shown in the figure) of the hollow fiber bundle 10 constitute potting portions 10a. In the potting portion 10a, gaps between the hollow fibers 12 and a gap between the hollow fiber bundle 10 and casing 20 are filled by the cured product of a potting agent. As a result, the hollow fiber 12 in the end portions of the hollow fiber bundle 10 are adhesively bonded and fixed together, and the end portions are fixed to the casing 20. The specific configuration of the potting portion 10a will be described below.

Each hollow fiber 12 constituting the hollow fiber bundle 10 has a hollow portion passing in the axial direction inside thereof. The end portion of each hollow fiber 12 on the treatment liquid injection side is closed, whereas the end portion on the filtrate take-out side is opened at the end surface of the potting portion 10a on this side. Further, on the treatment liquid injection side of the hollow fiber bundle 10, a treatment liquid injection portion 14 is provided, this injection portion passing through the potting portion 10a almost parallel to the hollow fibers 12. The end surface of the potting portion 10a on the treatment liquid injection side communicates with the end surface of the potting portion on the opposite side via the treatment liquid injection portion 14.

Structural materials of hollow fibers 12 are not particularly limited, provided that they can configure a porous structure that can be employed as a hollow fiber membrane, but materials that can be employed for a precision filtration membrane and ultrafiltration membrane are generally preferred. Polyvinylidene fluoride (PVDF) is preferred because it can be easily employed as such membrane.

The preferred pore diameter in the hollow fibers 12, as represented by an average pore diameter determined by a half-dry method, is preferably within a range of 0.01 to 5 $\mu$m, more preferably 0.05 to 1 $\mu$m, and even more preferably 0.1 to 0.5 $\mu$m. Where the average pore diameter is less than 0.01 $\mu$m, the resin material contained in the potting agent is hardly absorbed by the fine pores of the hollow fibers during the below-described potting. Therefore, the increase in filler content in the potting agent that accompanies the crawling process hardly occurs and a sufficient crawling inhibition effect cannot be obtained. On the other hand, where the average pore diameter exceeds 5 $\mu$m, the fine pores are filled not only with the resin material, but also with the filter. As a result, the sufficient increase in the filler content can hardly be expected. Hollow fibers with a graded structure in which the diameter of fine pores decreases in the direction from the inner surface or the inside of membrane toward the outer surface are preferred as the hollow fibers 12 because such a structure facilitates the increase in filler concentration close to the surface.

The casing 20 is provided so as to surround the hollow fiber bundle 10. As described hereinabove, the casing 20 is adhesively bonded and fixed to the end portions (potting portions 10a) of the hollow fiber bundle 10 with the potting agent cured product. Openings 22 located on the inner side of the potting portions 10a in both end portions are provided in the side surface of the casing 20. The material of the casing 20 is not particularly limited, and the casing can be made from a metal or a plastic material.

The concentrate take-out members 32, 34 are provided to cover the outer periphery of the casing 20 in the vicinity of both end portions thereof. These members have take-out tubes 32a, 34a that are aligned with the openings 22 of the casing 20. As a result, the inside of the casing 20 communicates with the outside of the hollow fiber module 100. Further, the concentrate take-out members 32, 34 may be provided integrally with the casing 20. For example, a configuration may be used in which the take-out tubes 32a, 34a are provided directly in the openings 22.

The treatment liquid injection member 42 is provided by fitting on the outside of the concentrate take-out member 32 on the treatment liquid injection side of the casing 20. In the treatment liquid injection member 42, an injection portion 42a is provided so as to protrude in the axial direction of the hollow fiber module 100. The filtrate take-out member 44 is provided by fitting on the outside of the concentrate take-out member 34 on the filtrate take-out side of the casing 20. In the filtrate take-out member 44, a take-out portion 44a is provided so as to protrude in the axial direction of the hollow fiber module 100. Further, the concentrate take-out members 32, 34, treatment liquid injection member 42, and filtrate take-out member 44 may be made from the material identical to that of the casing 20, or they may be made from different materials. The treatment liquid injection member 42 and filtrate take-out member 44 may be directly attached to the outer peripheral portions of the casing 20.

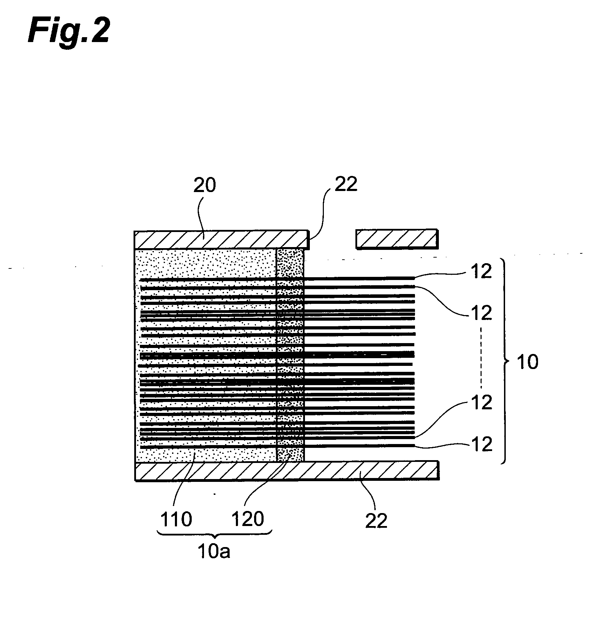

The configuration of the potting portion 10a in the hollow fiber bundle 10 will be described below in greater detail with reference to FIG. 2.

FIG. 2 illustrates schematically the cross-sectional configuration in the vicinity of the end portion on the treatment liquid injection side of the hollow fiber module. To facilitate the explanation, only the hollow fiber bundle 10 ( potting portion 10a) and casing 20 are shown in the figure. The configuration on the filtrate take-out side has the identical structure and the explanation thereof is herein omitted.

As shown in FIG. 2, the end portion of the hollow fiber bundle 10 in which a large number of hollow fibers 12 are bundled constitutes the potting portion 10a. In the potting portion 10a, the gaps between the hollow fibers 12 and the space between the hollow fiber bundle 10 and casing 20 are filled with a potting agent cured product. As a result, the hollow fibers 12 are adhesively bonded to each other, and the hollow fiber bundle 10 is fixed to the casing 20 in such potting portion 10a.

More specifically, the potting portion 10a has a two-layer structure in which an adhesive layer 110 and a protective layer 120 are provided in the order of description from the end surface on the treatment liquid injection side. The protective layer 120 is softer (has lower hardness) than the adhesive layer 110. In other words, the root portion of the hollow fiber bundle 10 that is fixed to the potting portion 10a is covered by the protective layer 120 that is softer than the adhesive layer 110. With such a configuration, stresses applied to the root portions of the hollow fibers 12 are relaxed, and the probability of the hollow fibers 12 being broken (ruptured) when the hollow fiber module 100 is used is reduced.

The potting agent for forming the adhesive layer 110 or protective layer 120 comprises a resin material and a filler. By appropriately changing these components (in particular, the resin material) it is possible to obtain potting agents that are suitable for forming the adhesive layer 110 and protective layer 120. The preferred potting agents in accordance with the present invention will be described below.

A curable resin material, in particular a thermosetting or photocurable resin material is preferred as the resin material contained in the potting agent. Specific examples of suitable materials include urethane resins, epoxy resins, silicone resins, and (meth) acrylic resins. Among them, from the standpoint of suitability for fixing the end portions of the hollow fiber bundle 10, curable resin materials such as urethane resins, epoxy resins, and silicone resins are preferred.

A urethane resin comprises an isocyanate component and a curing agent component such as polyol. Such urethane resin may be composed of isocyanate components or curing agent components of two or more kinds. Examples of isocyanate components include isocyanate group-terminated prepolymers composed of isocyanate components such as polymethylene diisocyanates, e.g. tolylene diisocyanate (TDI), diphenylmethane-type isocyanate, and hexamethylene diisocyanate (HDI) and polyol components such as the below-described polyols, or modification products thereof, or modification products of the above-described isocyanates. Among them, liquid diphenylmethane diisocyanate is preferred.

Examples of suitable curing agent components include low-molecular polyols such as ethylene glycol, diethylene glycol, propylene glycol, dipropylene glycol, 1,3-butane diol, and 1,4-butane diol; polyether polyols such as chipped ethers which are addition polymers of two or more from among polyalkylene ethers such as polyethylene glycol, polypropylene glycol, polytetramethylene ether glycol and alkylene oxides such as ethylene oxide and propylene oxide; linear or branched polyester polyols obtained by a reaction of poly carboxylic acids and the above-described low-molecular polyols and/or polyether polyols; polycaprolactone polyols produced by ring-opening polymerization of (substituted) caprolactones; polyolefin polyols of hydroxyl-terminated polybutadiene or hydrogenation products thereof; linear or branched castor oil polyols such as esterified polyols of a polyether polyol and a castor oil, dehydrated castor oil, or ricinolic acid, which is a castor oil fatty acid; amine polyols such as low-molecular amine polyols, e.g. mono-, di-, or triethanolamines and N-methyl-N,N'-diethanolamine, such as N,N,N',N'-tetrakis[2-hydroxypropyl]ethylenediamine, N,N,N',N'-tetrakis[2-hydroxyethyl]ethylenediamine, or amine polyols obtained by addition of an alkylene oxide such as propylene oxide or ethylene oxide to an amino compound such as ethylenediamine; and modification products of the above-described isocyanates. Among them, mixtures of high-molecular polyols and short-chain diols are preferred.

Further, an epoxy resin contains an epoxy resin main agent component and a curing agent component. Examples of epoxy resin main agent components include polyglycidyl compounds of polyhydric phenols such as bisphenol A, bisphenol F, and novolak resins, oligomers thereof, and polyglycidyl compounds of copolymers thereof. Other examples include aliphatic epoxy compounds, alicyclic epoxy compounds, and alicyclic aliphatic epoxy compounds disposed in Japanese Patent Application Laid-open No. 6-49426. In addition, mixtures of bisphenol epoxy resins and urethane modified epoxy resins disclosed in Japanese Patent No. 3250655, and mixtures of bisphenol epoxy resins, urethane modified epoxy resins, and sorbitol polyglycidyl ethers disclosed in Japanese Patent Application Laid-open No. 2000-176253 can be used. Examples of curing agent components of epoxy resins include polyamine curing agents, acid-based curing agents, and polyamide resin curing agents disclosed in Japanese Examined Patent Application No. 6-61431.

For example, resins classified as liquid silicone rubbers are preferred as the silicone resin. According to the curing mechanism thereof, such resins can be classified into condensation-type and addition-type resins, and the addition-type resins are preferred because the curing rate thereof can be easily controlled, the curing reaction proceeds uniformly, the resin can be effectively cured to deep portions thereof, the amount of produced byproducts is small, and the resins have excellent dimensional stability. The curing reaction rate of addition-type liquid silicone rubbers can be freely changed by adjusting the curing temperature, type and amount of a catalyst, and amount of reaction inhibitor. Further, because the addition-type liquid silicon rubbers do not require water such as moisture contained in the air for the curing reaction to proceed, the curing reaction proceeds uniformly on the surface and inside the rubber and curing can effectively reach the deepest portions of the rubber. Further, with the addition-type liquid silicone rubbers, water, alcohols, acetic acid, oximes, ketones, amines, amides, hydroxyamines and other byproducts that usually occur during condensation curing of the condensation-type liquid silicone rubbers are not generated. Therefore, the addition-type liquid silicon rubbers have excellent dimensional stability during curing and a small linear contraction ratio.

An addition-type liquid silicone rubber can be obtained by a mechanism according to which siloxane chains are crosslinked by an addition reaction of a polysiloxane containing vinyl groups and a polysiloxane having Si-H bonds. Such an addition reaction can be represented, for example, by the following reaction formula.

[C 1]

$$-Si-CH=CH_2 + HSi- \rightarrow -Si-CH_2CH_2-Si-$$

Both the resin materials of a one-liquid type in which curing proceeds with a single component and the resin materials of a two-liquid type in which curing proceeds by mixing two liquids, namely, a main agent and a curing agent, can be employed as the curable resin materials. From the standpoint of maintaining a low viscosity of the potting agent, the resin materials of a two-liquid type are preferred. However, in the case of resin materials of a two-liquid type, it is preferred that the interval from mixing the two liquids to curing be comparatively long. More specifically, the usage interval is preferably equal to or longer than 5 min, more preferably equal to or longer than 10 min.

The usage interval as referred to herein is the time required for the viscosity of the mixture to reach 10 Pa·s after the two liquids have been mixed. Where the usage interval is less than 5 min, the viscosity of the potting agent increases after the potting agent has been applied to the hollow fiber bundle 10 and before the potting agent has sufficiently penetrated into the gaps between the hollow fibers 12, and sufficient fixing of the end portions of the hollow fiber bundle 10 is difficult to perform. On the other hand, where the usage interval is too long, a long time is required for potting the hollow fiber bundle 10 and production efficiency of the hollow fiber module tends to decrease. Accordingly, it is preferred that the usage interval of the resin material of a two-liquid type be equal to or shorter than 12h, more preferably equal to or shorter than 6 h.

Inorganic fillers, for example, hydrophobic silica, hydrophilic silica, titanium oxide, calcium carbonate, and talc are preferably used as the filler contained in the potting agent. Among them, silica is preferred. Silica excels in dispersivity in resin materials, has a low critical value of filler content in relation to viscosity increasing effect, can accelerate the rise of the variation curve, and tends to demonstrate excellent viscosity increasing effect when the content of filler in the potting agent increases.

The preferred mean particle size of the filler (mean particle size of primary particles or aggregates such as secondary particles) is a size that can be classified according to the hollow fibers 12 (hollow fiber membrane) and differs depending on the type of hollow fibers 12. However, because the pore side of the fine pores in the hollow fibers 12 and the particle size of the filler have their own distributions, it is not necessary that all the fillers can be classified based on the hollow fibers 12. For example, a filler is preferred for which the entrapment ratio by hollow fibers 12 is preferably equal to or higher than 50%, more preferably equal to or higher than 70%, and even more preferably equal to or higher than 90%. By using the filler for which such an entrapment ratio can be obtained greatly reduces the absorption of the filler by the hollow fibers 12 during potting and makes it possible to induce reliably the increase in viscosity caused by the increase in filler concentration occurring due to the crawling.

The entrapment ratio as referred to herein represents a ratio to which the filler contained in the potting agent can be removed when the potting agent is ultrafiltered by the hollow fibers 12 (hollow fiber membrane). More specifically, the entrapment ratio can be measurement by the following method. Thus, a hollow fiber with a length of about 50 mm is prepared. One end of the hollow fiber is closed and the open end is connected by an adhesive or the like to an evacuation apparatus so that the hollow portion of the fiber can be evacuated. The length of the portion that can be filtered, this portion being outside the adhesive bonding portion and the clogging portion of the hollow fiber, is 30 mm. Then, the potting agent (filler content $A_0$) is poured into a container such as a disposable cup, the hollow fiber is immediately completely immersed into the potting agent, and the hollow portion of the hollow fiber is evacuated so that the gate pressure reaches -0.095 MPa. After retaining this state for 10 min, the central portion is retuned to the normal pressure and the potting agent is then completely cured. The hollow fibers are then taken out from the cured potting agent and the amount of filler $A_1$ inside the potting agent that oozed out into the hollow portion and was cured therein is measured. The entrapment ratio then can be calculated based on $100 \times (A_0 - A_1)/A_0$.

More specifically, when hollow fibers from PVDF that have a mean pore size of (0.01 to 5 $\mu$m) and obtained by the above-described half-dry method are used as the hollow fibers 12, the mean particle size of the filler is preferably 0.005 $\mu$m to 20 $\mu$m, more preferably 0.01 $\mu$m to 10 $\mu$m, and even more preferably 0.05 $\mu$m to 5 $\mu$m.

Even if the mean particle size of the filler is sufficiently larger than the pore diameter of the hollow fibers 12, the sufficient inhibition of crawling sometimes cannot be obtained. Therefore, it is preferred that the mean particle size of the filler be equal to or less than 20 $\mu$m and as small as possible within this range. Reasons therefor are not clear, but this result is apparently due to the fact that the interaction between filler particles is made more difficult as the particle size decreases. Where the level of interaction between the particles is low, filler particles hardly aggregate. As a result, in the potting agent containing a filler with a large particle size, the rising point of the variation curve shifts to the side with a larger filler content, and the slope after rising becomes gradual. Therefore, the increase in the potting agent viscosity caused by crawling is made more difficult by the increase in filler particle size. In particular, the effect of inhibiting the crawling is more difficult to demonstrate to a full extent with a potting agent containing a filler with a mean particle size in excess of 20 $\mu$m.

A variety of measurement methods can be employed for measuring the mean particle size of the filler. However, the filler is usually dispersed in a dispersion medium in the form of aggregated particles, which are aggregates of primary particles, and then the aggregation state changes in a variety of ways under the effect of mixing conditions, chemical composition of the dispersion medium, and properties of the filler itself. For this reason, it is preferred that the mean particle size be measured by observing the dispersion state of the filler in the potting agent under an electron microscope.

More specifically, when the mean particle size of the filler is measured, the prepared potting agent is cast into an appropriate container or mold and completely cured. Then, a slice is cut out from the cured substance by using a microtome or the like. The slice is then photographed under a scanning electron microscope at a magnification such as that least 50 aggregates are present in the image area. The photo obtained is subjected to image analysis, the diameters (diameter of equivalent circle) of individual aggregates are measured, an average value is calculated, and the result obtained can be taken as the mean particle size.

The content of the filler in the potting agent is equal to or less than the content of the filler at a rising point of a variation curve of potting agent viscosity vs. filler content ("a critical value of filler content with respect to a viscosity increasing effect"). The variation curve of potting agent viscosity vs. filler content can be found, for example, by preparing a plurality of potting agents with different filler content by using the same filler and resin material, measuring the viscosity of the prepared potting agents, and plotting the values of potting agent viscosity against the filler content based on the measured results. The critical value of filler content with respect to a viscosity increasing effect in the case identical resin material and filler are used can be derived based on the variation curve that has thus been plotted in advance.

A more preferred filler content is less by 20% or more than the critical value of filler content with respect to a viscosity increasing effect, and preferably equal to or more than 1/20, even more preferably equal to or more than 1/10 of the critical value. With such filler content, a sufficiently low viscosity of the potting agent can be maintained and the increase in viscosity of the potting agent that follows the crawling process can be induced more reliably.

More specifically, the filler content in the potting agent is preferably 0.01 part by mass to 5.00 parts by mass, and more preferably 0.1 part by mass to 3 parts by mass with respect to 100 parts by mass of the resin material. With such filler content, when the above-described advantageous hollow fibers 12 and potting agent are used, a sufficiently low viscosity of the potting agent can be maintained, sufficient penetration into the hollow fibers 12 during potting can be induced, and crawling of the potting agent can be reliably reduced. In the description of the present application, values based on a mass standard (parts by mass, etc.) and values based on a weight standard (parts by weight, etc.) are assumed to be identical.

The viscosity of the potting agent having the above-described configuration during application to the hollow fiber bundle 10 is preferably 0.1 Pa·s to 5.0 Pa·s, more preferably 0.5 Pa·s to 3 Pa·s. The expression "during application to the hollow fiber bundle 10" refers to a point of time at which the potting agent is used for potting in the below-described method for manufacturing a hollow fiber module, and strictly speaking represents a point of time immediately before the potting agent comes into contact with the hollow fiber bundle 10. However, in the below-described case, "the viscosity during application to the hollow fiber bundle 10" may be replaced with "the initial viscosity" of the potting agent.

Thus, when the viscosity variation of the potting agent is small under the storage conditions thereof, "the viscosity during application to the hollow fiber bundle 10" is equal to "the initial viscosity". Also, where a two-liquid resin material is used as the resin material, when the two liquids are mixed immediately prior to potting and the usage interval of the resin material is within the above-described advantageous interval, the viscosity variation after the potting agent has been prepared and before it is used for potting is small. Therefore, "the viscosity during application to the hollow fiber bundle 10" also may be taken as "the initial viscosity". The value of initial viscosity can be obtained by measuring viscosity with a B-type viscometer or the like immediately after the potting agent has been prepared, for example, immediately after the resin material (all the components thereof) and filler have been mixed.

Where the viscosity of potting agent during application to the hollow fiber bundle 10 is less than 0.1, there is a risk of the potting agent penetrating into the hollow section through the membrane surface of hollow fibers 12 and closing the hollow portion. On the other hand, where the viscosity is higher than 5 Pa·s, the potting agent cannot sufficiently penetrate into the gaps between the hollow fibers 12 during potting.

As described hereinabove, the potting portion 10a has a two-layer structure composed of the adhesive layer 110 and protective layer 120, the protective layer 120 having a hardness lower than that of the adhesive layer 110. The hardness of these layers is mainly determined by the hardness of the cured product of the potting agent charged between the hollow fibers 12.

More specifically, the D hardness of the cured product of potting agent in the adhesive layer 110 is preferably 30 to 98, more preferably 40 to 60. Where the D hardness of the cured product of potting agent in the adhesive layer 110 is within a range of 30 to 98, the end portions of the hollow fiber bundle 10 can be fixed effectively and good pressure resistance, endurance, and liquid tightness of the potting portion 10a are obtained. A potting agent containing an urethane resin or epoxy resin as the resin material can be used to obtain the cured product having such D hardness, and the potting agent containing an urethane resin is more preferred. The D hardness as referred to herein is a hardness measured by a type-D durometer according to JIS K6253.

Further, the hardness of the cured product of the potting agent in the protective layer 120 is less than that of the cured product of the potting agent in the adhesive layer 110. Thus, the A hardness of the cured product of the potting agent in the protective layer is preferably 10 to 80, more preferably 20 to 40. Where the cured product of the potting agent in the protective layer 120 satisfies this condition, stresses applied to the root portion where the hollow fibers 12 are fixed to the potting 10a are sufficiently relaxed by this layer and fracture (rupture) of the hollow fibers 12 can be inhibited. A potting agent containing an urethane resin or a silicone resin as the resin material can be used to obtain the cured product having such A hardness, and the potting agent containing a silicone resin is more preferred from the standpoint of softness and chemical stability. The A hardness as referred to herein is a hardness measured by type-A durometer according to JIS K6253.

As described hereinabove, the potting agent for forming the potting portion 10a comprises a resin material and a filler and, if necessary, may additionally contain other components. Examples of such other components include curing enhancing agents, plasticization enhancers, diluting agent, coupling agent, and curing delaying agents. These other components are preferably contained in amounts that produce no substantial effect on viscosity of the potting agent or hardness of the cured product of potting agent.

The hollow fiber module 100 of the above-described configuration can be used for water purification in which the purified filtrate is obtained by removing contaminants from the treatment liquid. A method for water purification using the hollow fiber module 100 will be described below. First, the treatment liquid is introduced into the hollow fiber module 100 from the injection portion 42a in the treatment liquid injection member 42. Then, the treatment water enters the casing 20 through the treatment water injection portion 14 provided in the potting portion 10a.

The treatment liquid that entered the casing 20 fills the space between the hollow fibers 12 constituting the hollow fiber bundle 10 and permeates into the hollow portions inside the fibers via the wall surface (membrane surface) of the hollow fibers 12. In this case, the contaminants contained in the treatment liquid are entrapped by the membrane surface of the hollow fibers 12 and only the filtrate from which the contaminants have been removed enters the hollow portions. The filtrate that entered the hollow portions of hollow fibers 12 is discharged from the openings at the end surface of the potting portion 10 on the filtrate take-out side. On the other hand, the contaminants removed by the hollow fibers 12 are discharged as a concentrated treatment liquid (concentrate) to the outside from the take-out pipes 32a, 34a in the concentrate take-out members 32, 34.

Thus, the filtrate discharged from inside of the casing 20 is taken out to the outside of the hollow fiber module 100 from the take-out portion 44a in the filtrate take-out member 44. The contaminants are thus removed from the treatment liquid by the hollow fiber module 100 and the treatment liquid is purified.

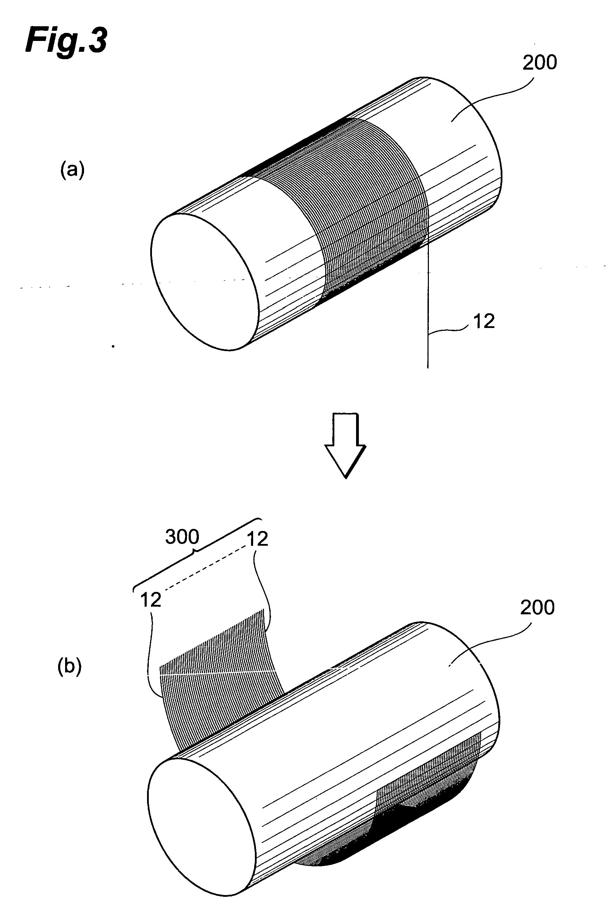

A method for manufacturing the hollow fiber module having the above-described configuration will be described below with reference to FIG. 3 to FIG. 5.

First, a sheet-like article 300 is formed in which a plurality of hollow fibers 12 are arranged side by side. FIG. 3 shows a process for manufacturing the sheet-like article in which hollow fibers are arranged side by side. In this process, after the hollow fiber 12 has been prepared, the hollow fiber 12 is wound around a cylindrical roll 200 as shown in (a) of FIG. 3. In this case, the winding position of the hollow fiber 12 gradually shifts, so that the turns of the hollow fiber 12 are arranged side by side in the height direction of the cylinder. Then, as shown in (b) of FIG. 3, the hollow fiber 12 wound about the roll 200 is cut along a straight line along the height direction of the cylinder. In this case, the hollow fiber 12 in a wound state thereof may be fixed with a pressure-sensitive adhesive tape or the like to prevent the hollow fibers 12 from scattering after cutting. The sheet-like article 300 in which the hollow fibers 12 are arranged side by side is thus obtained.

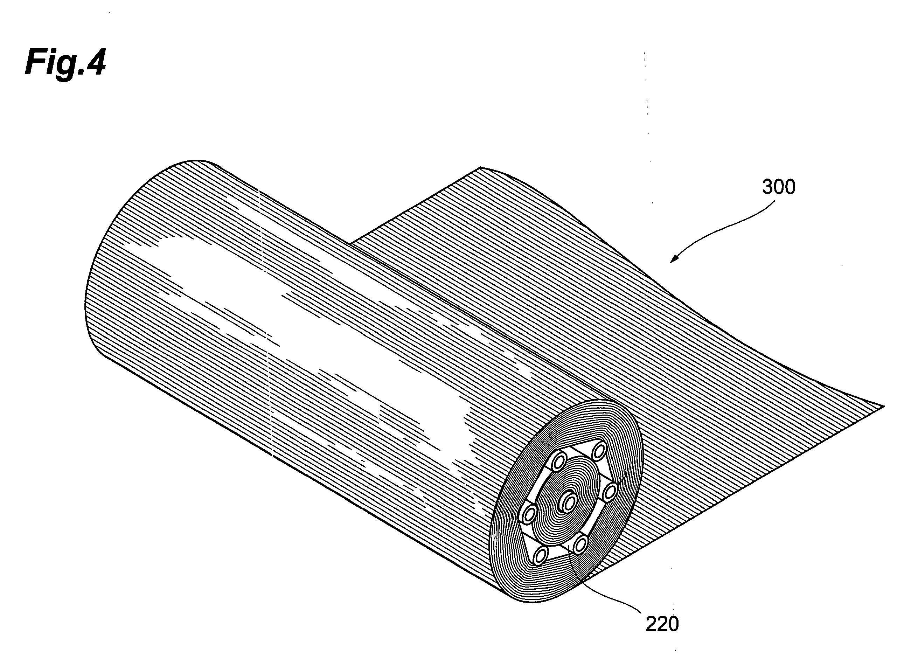

FIG. 4 illustrates a process in which the sheet-like article in which the hollow fibers are arranged side by side is wound. As shown in the figure, the sheet-like article 300 obtained in the above-described manner is wound in the direction in which the hollow fibers 12 are arranged side by side, thereby producing a hollow fiber bundle 10 in which the hollow fibers 12 are bundled. In this winding process, a plurality of tubes 220 for forming the treatment liquid injection portion 14 in the potting portion 10a are inserted into one end portion in the hollow fiber bundle 10 while the sheet-like article 300 is being wound. The insertion positions of the tubes are not particularly limited, but in the present embodiment, the tubes are positioned in the center of the hollow fiber bundle 10 and in a plurality of (here, 6) locations with a predetermined spacing in the circumferential direction about the center. The winding may be performed by using a predetermined tool. Further, a variety of rod-shaped members may be used instead of the tubes 220.

The hollow fiber bundle 10 obtained by winding the sheet-like article 300 has a diameter preferably of 70 to 400 mm, more preferably of 130 to 300 mm. As a result, a cylindrical hollow fiber module suitable for practical use can be obtained.

In the hollow fiber bundle 10, the hollow fibers 12 at least in the portion that will serve as the potting portion 10a are preferably collected so that the below-described condition relating to filling ratio be satisfied. The filling ratio is a value found based on the formula below. In the formula, $S_b$ stands for a surface area of a cross section obtained by cutting the cylindrical hollow fiber bundle 10 perpendicularly to the height direction in the portion that will serve as the potting portion 10a, $S_{hf}$ stands for a surface area of the cross section perpendicular to the longitudinal direction of one hollow fiber, and n stands for the number of hollow fibers 12 contained in the hollow fiber bundle 10.

$$\text{Filling Ratio (\%)} = 100 \times (S_{hf} \times n)/S_b.$$

In the present embodiment, the filling ratio of the hollow fiber bundle 10 is preferably 40 to 80%, more preferably 50 to 70%. In such case, the hollow fibers 12 are collected with a sufficient density in the hollow fiber bundle 10. Therefore, a sufficiently large membrane surface area can be obtained for the given size of the hollow fiber module 100, and good filtration efficiency is obtained. In the conventional hollow fiber bundle having such filling ratio, because the distance between the hollow fibers is small, it is difficult for the potting agent to penetrate sufficiently between the hollow fibers during potting. By contrast in the present embodiment, using the potting agent with above-described excellent penetration ability, it is possible to perform potting effectively even with the above-described filling ratio.

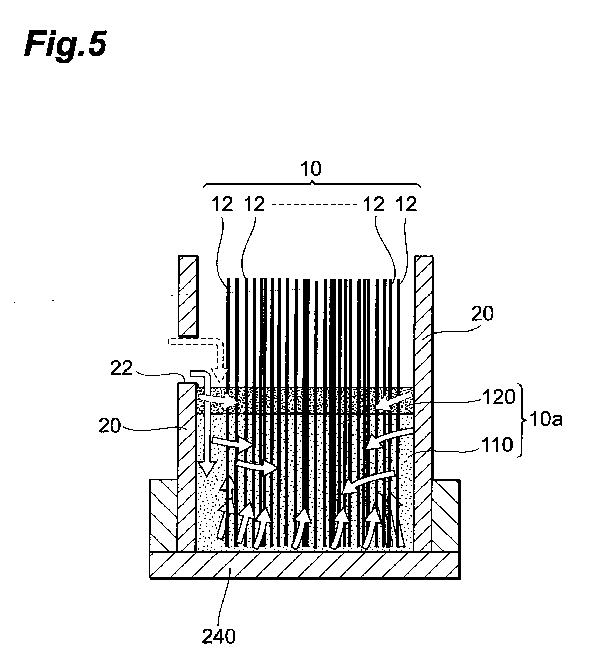

Then, the hollow fiber bundle 10 is inserted in the cylindrical casing 20 and the end portions of the hollow fiber bundle 10 are potted using the above-described potting agent. FIG. 5 illustrates schematically the cross-sectional configuration in the vicinity of the end portion of the hollow fiber bundle 10 inserted in the casing in the potting process. First, potting of the end portion on the treatment liquid injection side will be explained.

In this process, first, a sealing member 240 is attached to the end portion of the casing 20 so as to prevent the potting agent from leaking, and the casing 20 is then disposed vertically so that the aforementioned end is located at the lower end of the casing. Then, the hollow fiber bundle 10 is inserted into the casing 20 so that the end portion side in which the tube 220 has been inserted is located on the lower end. The sealing member 240 may be attached after the hollow fiber bundle 10 has been inserted into the casing 20.

Then, the potting agent (referred to hereinbelow as "the first potting agent") for forming the adhesive layer 110 is injected into the region in the vicinity of the end portion in the casing 20. As shown by the solid line arrow in the figure, the first potting agent permeates in the gaps between the hollow fibers 12 from both sides, namely, from the circumferential side and end surface side of the hollow fiber bundle 10 to fill the end portion of the hollow fiber bundle 10 and also fills the space between the hollow fiber bundle 10 and the casing 20. The injection of the first potting agent can be performed from the opening 22 provided in the side surface of the casing 20, as shown in the figure, or for example from an opening provided in the bottom surface of the sealing member 240.

Then, in the case where an agent containing a curable resin material is used as the first potting agent, this first potting agent is cured to form the adhesive layer 110. When an agent containing a resin material of a two liquid type is used as the first potting agent the curing is induced by allowing the first potting agent to stay as is, or by predetermined heating after first potting agent has been injected. When a photocurable or thermosetting one-liquid resin material is used, the curing can be performed by irradiation with light or heating after the sufficient penetration of the potting agent between the hollow fibers 12 has been confirmed.

Then, a potting agent (referred to hereinbelow as "the second potting agent") for forming a protective layer 120 is poured on top of the adhesive layer 110. As shown by a broken line arrow in the figure, the second potting agent permeates in the gaps between the hollow fibers 12 from the circumferential side of the hollow fiber bundle 10 on the adhesive layer 110 and also fills the space between the hollow fiber bundle 10 and the casing 20.

Where a potting agent containing a curable resin material is used as the second potting agent, the second potting agent is cured in the same manner as the first potting agent and the protective layer 120 is formed. After the sealing member 240 has been separated from the casing 20, the tube 220 is removed from the end portion of the hollow fiber bundle 10 subjected to potting and the treatment liquid injection portion 14 is formed in the potting portion 10a. The potting portion 10a is thus formed in the end portion on the treatment liquid injection side of the hollow fiber bundle 10.

On the other hand, potting of the end portion on the filtrate take-out side can be performed in almost the same manner as the above-described potting on the treatment liquid injection side, but for example the following operations have to be performed to maintain the end portion of the hollow fibers 12 on this side open. Thus, first, the end portions of hollow fibers 12 are closed prior to injecting the first potting agent in order to prevent the potting agent from penetrating into the hollow portions of the hollow fibers 12. Then, the adhesive layer 110 and protective layer 120 are formed and the zone close to the end surface of the potting portion 10a is then cut to remove the sealed portion of the hollow fibers 12. As a result, the hollow fibers 12 can be made open in the end surface of the potting portion 10a.

In the manufacture of hollow fiber module 100, both end portions of the hollow fiber bundle 10 that has been inserted into the casing 20 as described hereinabove are potted and then the concentrate take-out members 32, 34 and also the treatment liquid injection member 42 and filtrate take-out member 44 are attached to respective end portions. The hollow fiber module 100 of the configuration shown in FIG. 1 can thus be obtained.

In the method for manufacturing such hollow fiber module 100, in the potting process, because the potting agent containing the above-described resin material and a specific amount of the filler is used in the potting process, the following effect can be demonstrated. Thus, first, because the filler content in the potting agent is small, a low viscosity is maintained. Therefore, the injected potting agent can effectively penetrate into the gaps between the hollow fibers 12 constituting the hollow fiber bundle 10. As a result, in the potting portion 10a formed by potting, the gaps between the hollow fibers 12 are completely filled with the cured product of the potting agent, the end portions of the hollow fiber bundle 10 are strongly fixed, and the endurance, pressure resistance, and liquid tightness of the potting portion 10a are very good.

Further, with the above-described potting agent, crawling of the potting agent in the potting process can be substantially reduced. Thus, as the potting agent crawls up, the resin material contained therein is gradually absorbed in the fine surface pores of hollow fibers 12 and the filler content gradually increases. Therefore, the aforementioned "rising point" is shortly exceeded and the viscosity starts to rise rapidly. As a result, crawling of the potting agent caused by the capillary phenomenon can hardly proceed and, therefore, subsequent crawling of the potting agent is inhibited.

The embodiments of the hollow fiber module employing the preferred potting agent in accordance with the present invention and method for manufacturing such a module are described above, but the present invention is not limited to these embodiments and can be appropriately modified without departing from the essence thereof.

For example, in the configuration described hereinabove, both the adhesive layer 110 and the protective layer 120 are provided in the potting portion 10a of the hollow fiber module 100, but such configuration is not limiting and a single layer having the functions of the adhesive layer 110 may be provided in the potting portion 10a. However, in this case, where the hardness of the potting portion 10a becomes too high, fracture (rupture) of hollow fibers 12 easily occurs. Therefore, the D hardness of the cured product of potting agent constituting this layer is preferably within a range of 40 to 60. In such case, even when the potting portion has a single layer configuration, fracture (rupture) of hollow fibers 12 can be inhibited, while effectively fixing the end portions of the hollow fiber bundle 10.

Further, it is not necessary that both the first potting agent and the second potting agent be the potting agents in accordance with the present invention. Thus, any one of them may be the potting agent in accordance with the present invention. If only one of them is the potting agent in accordance with the present invention, it is preferred that the first potting agent be such an agent. In this case, crawling of the first potting agent during the formation of the adhesive layer 110 can be inhibited and the protective layer 120 can be effectively formed thereupon. From the standpoint of inhibiting the crawling of the potting agent and maintaining good membrane surface area, it is preferred that both the first potting agent and the second potting agent be the potting agents in accordance with the present invention.

Further, with the above-described manufacturing method, the sheet-like article 300 is obtained by cutting the hollow fibers 12 after winding on the roll 200, but the sheet-like article 300 may be also formed, for example, by arranging side by side a plurality of hollow fibers 12 that have been cut in advance to a predetermined uniform length. Furthermore, the hollow fiber bundle 10 may be formed by directly bundling a plurality of cut hollow fibers 12, without winding the sheet-like article 300, or by assembling a plurality of hollow fiber bundles (small bundles).

Further, the hollow fiber module employing the present invention is not limited to the above-described cylindrical module in which both ends of the hollow fiber bundle are bundled and can be any of a variety of hollow fiber modules in which an end portion is fixed by a potting agent, for example, a module of a fiber bundle immersion type or a flat type (screen-shaped) module in which only one end portion of the hollow fiber bundle is fixed.

Examples

The present invention will be described below in greater detail with reference to examples thereof, but the present invention is not limited to these examples.

[Preparation of Potting Agent]

(Example 1)

First, a low-viscosity product SA-7082 (San Yurekku KK), which is a two-liquid urethane resin material was prepared as a resin material, and Aerosil 200 (manufactured by Japan Aerosil Co., Ltd., mean particle size primary particles 12 nm), which is fumed silica, was prepared as the filler.
A total of 0.38 part by weight of the fumed silica was added to 100 parts by weight of the diol component of the urethane resin material, and the components were mixed for a stirring time of 2 min by using a stirrer (Awatori Rentaro MX-201, manufactured by Shinki KK). Then, 100.38 parts by weight of the mixture and 52 parts by weight of the isocyanate component of the urethane resin material were mixed and a potting agent of Example 1 was prepared. The filler content in the potting agent was 0.25 part by weight per 100 parts by weight of the resin material.

(Example 2)

A potting agent of Example 2 was prepared in the same manner as in Example 1, except that Aerosil R972 (manufactured by Japan Aerosil Co., Ltd., mean particle size primary particles 16 nm), which is fumed silica, was used instead of Aerosil 200.

(Example 3)

First, RTV Rubber KE103 (manufactured by Shin-Etsu Chemical Co., Ltd.), which is a silicone resin material, was prepared as a resin material and Aerosil 200, which is fumed silica, was prepared as a filler.
Then, 0.75 part by weight of the fumed silica was mixed with 100 parts by weight of the main component of the silicone resin material. A potting agent of Example 3 was then prepared by mixing 100 parts by weight of the mixture with 5 parts by weight of a curing agent for the silicone resin material. The filler content in the potting agent was 0.71 part by weight per 100 parts by weight of the resin material.

(Example 4)

A potting agent of Example 4 was prepared in the same manner as in Example 3, except that Nipsil LP (manufactured by Toso Silica Co, Ltd., mean particle size of primary particles is 14 nm, mean particle size of aggregated particles is 9 $\mu$m), which is fumed silica, was used instead of Aerosil 200.

(Comparative Example 1)

A low-viscosity product SA-7082, which is a urethane resin material, was prepared as a resin material. A potting agent of Comparative Example 1 was prepared by mixing 100 parts by weight of an isocyanate component of the urethane resin material and 52 parts by weight of a diol component.

(Comparative Example 2)

RTV Rubber KE103, which is a silicone resin material, was prepared as a resin material. A potting agent of Comparative Example 2 was prepared by mixing 100 parts by weight of the main agent of the silicon resin material and 5 parts by weight of a curing agent.

(Comparative Example 3)

A potting agent of Comparative Example 3 was prepared in the same manner as in Example 3, except that the filler content was made 2.86 parts by weight per 100 parts by weight of the resin material.

[Evaluation of Potting Agent]

The potting agents of Examples 1 to 4 and Comparative Examples 1 to 3 were used and the "critical value of filler content with respect to a viscosity increasing effect" and "initial viscosity" of each potting agent and also "the crawling height" and "potting agent penetration ability" in the case potting of the hollow fiber bundle was performed using each potting agent were evaluated by the following methods. The results obtained are shown in Table 1.

(Measurement of Critical Value of Filler Content with Respect to a Viscosity Increasing Effect)

Resin materials and fillers identical to those used in examples and comparative examples were employed, a plurality of potting agents with different filler contents were prepared, and the initial viscosity of the potting agents was measured by the following method. The measurement results were used to plot a graph in which the filler content was plotted against the abscissa and the initial viscosity was plotted against the ordinate. The "variation curve of potting agent viscosity to filler content" for each potting agent was obtained from the graph. The filler content (parts by weight per 100 parts by weight of the resin material) at the rising point of the variation curve was found, and this content was taken as the "critical value of filler content with respect to a viscosity increasing effect" of each potting agent (represented by "critical value of filler content" in the table).

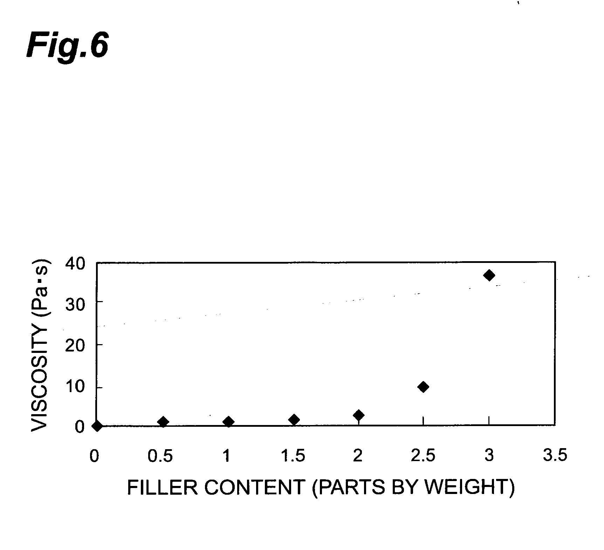

As an example, the results representing the initial viscosity (Pa·s) vs. filler content (parts by weight) in the potting agent of Example 3 are shown in Table 1, and the "variation curve of potting agent viscosity to filler content" obtained by plotting these results as a graph is shown in FIG. 6.

[Table 1]

| Filler content (parts by weight) | Initial viscosity (Pa·s) |
|---|---|
| 0.0 | 0.805 |
| 0.5 | 1.085 |
| 1.0 | 1.274 |
| 1.5 | 1.620 |
| 2.0 | 2.718 |
| 2.5 | 9.469 |
| 3.0 | 36.771 |

Table 1 and FIG. 6 confirm that the slope (Pa·s/ (parts by weight)) between the filler content of 2.5 parts by weight and 3.0 parts by weight exceeds 20. A "critical value of filler content with respect to a viscosity increasing effect" of 2.75 parts by weight was calculated from the critical value for the potting agent of Example 3.

(Measurement of Initial Viscosity)

An as-prepared potting agent was sandwiched between parallel round plates (spacing 1 mm) of a measurement chamber and this configuration was used to measure the viscosity (Pa·s) at an angular frequency of 1.0 rad/s at a point in time that is 33 sec after the setting of the potting agent has been completed with a Dynamic Stress Rheometer (DSR).

(Measurement of Crawling Height)

PVDF hollow fibers (hollow fiber membrane with an outer diameter of 1.40 mm, an inner diameter of 0.87 mm, a membrane thickness of 0.27 mm, a porosity ratio of 72%, a mean pore diameter of 0.14 $\mu$m, a maximum pore diameter of 0.26 $\mu$m, a differential pressure of 100 kPa, a temperature of 25°C, and a pure water flux of 74 m$^3$/m$^2$/day at a sample length of 800 mm; prepared according to the description of International Patent Application WO2004/081109 Pamphlet) were prepared and 20 fibers were bundled to obtain a hollow fiber bundle. The filling ratio of the hollow fiber bundle was 83%.

Then, 50 ml of the as-prepared potting agent was poured into a disposable cup (capacity 100 ml, Product Number 1-4620-01, manufactured by Azuwan KK), and an end portion of the hollow fiber bundle was immediately inserted to the very bottom of the disposable cup. The height of the potting agent at this time was about 25 mm. The system was allowed to stay for 24 h to cure the potting agent, and the end portion of the hollow fiber bundle was thus potted.

Then, the potted hollow fiber bundle was removed from the disposable cup, the hollow fibers constituting the hollow fiber bundle were observed, and the distance from the upper surface of the potting portion (root portion where potting was performed) to the distal end portion to which the potting agent had crawled (crawling height) was measured. Similar measurements were conducted for 20 hollow fibers, and the average value of the crawling height was calculated. The value obtained was taken as a crawling height in the case each potting agent was used.

(Evaluation of Penetration Ability of Potting Agent)

First, a total of 1300 of the above-described hollow fibers made from PVDF were bundled to obtain a filling ratio of 60%. Then, a cylindrical case made from a polyvinyl chloride resin that had an inner diameter of 89 mm and had attached thereto a sealing member (potting adapter) that sealed the end portion at one end was prepared, and the hollow fiber bundle was inserted therein from the end portion that is opposite the sealed side. The cylindrical case with the hollow fiber bundle inserted therein was placed vertically so that the sealed side faced down.

The potting agent was then cast from the opening in the upper part of the cylindrical case, and the zone close to the end portion of the cylindrical case on the sealed side was filled with the potting agent. The configuration was allowed to stay as is for 12 h and the potting agent was cured. The end portion of the hollow fiber bundle was thus fixed (potted) with the potting agent inside the cylindrical case and a sample for evaluating the penetration ability was obtained. The height of the charged potting agent (distance from the end surface on the sealed side to the upper surface of the potting agent) was 70 mm.

The potting adapter was removed from the sample obtained, and the sample was cut along the circumferential direction in a position at a distance of 60 mm from the end surface of the cylindrical case on the sealed side. The cut surface was observed, and the number of hollow fibers that were not fixed or were only partially fixed in the cross section (number of fixing defects) was calculated. The penetration defect ratio (%) was calculated based on the following formula.

$$\text{Penetration Defect Ratio (\%)} = 100 \times (\text{number of fixing defects})/(\text{total number of hollow fibers}).$$

The results obtained are shown in Table 2. The higher is the penetration defect ratio, the worse is the penetration ability of the potting agent used.

[Table 2]

| | Critical value of filler content (parts by weight) | Initial viscosity (Pa·s) | Crawling height (mm) | Penetration defect ratio (%) |
|---|---|---|---|---|
| Example 1 | 2.25 | 1.41 | 8.4 | 0 |
| Example 2 | 2.75 | 1.40 | 9.6 | 0 |
| Example 3 | 2.75 | 1.15 | 3.5 | 0 |
| Example 4 | 3.25 | 0.87 | 9.8 | 0 |
| Comparative Example 1 | - | 1.34 | 20.5 | 0 |
| Comparative Example 2 | - | 0.81 | 15.2 | 0 |
| Comparative Example 3 | 2.75 | 36.8 | less than 1 | 66 |

Table 2 demonstrates that when the potting agents of Examples 1 to 4 were used, the crawling height was small and the penetration ability of the potting agents was good, but when the potting agents of Comparative Examples 1 to 3 were used, the properties thereof were insufficient.

**Claims**

1. A potting agent for fixing an end portion of a porous hollow fiber group composed of a plurality of porous hollow fibers, the potting agent comprising:

   a resin material and a filler, wherein
   a content of the filler is equal to or less than a content of the filler at a rising point of a variation curve of viscosity of the potting agent to filler content.

2. A potting agent for fixing an end portion of a porous hollow fiber group composed of a plurality of porous hollow fibers, the potting agent comprising:

   a resin material and a filler, wherein
   a content of the filler is 0.01 to 5.00 parts by mass per 100 parts by mass of the resin material.

3. The potting agent according to claim 1 or 2, wherein the filler has a mean particle size of 0.005 to 20 $\mu$m.

4. The potting agent according to any of claims 1 to 3, wherein the resin material is a curable resin material.

5. The potting agent according to any of claims 1 to 4, wherein a viscosity during application to the porous hollow fiber group is 0.1 to 5.0 Pa·s.

6. A method for manufacturing a hollow fiber module, comprising a step of filling at least one end portion of a porous hollow fiber group composed of a plurality of porous hollow fibers with the potting agent according to any of claims 1 to 5.

7. A hollow fiber module, wherein at least one end portion of a porous hollow fiber group composed of a plurality of porous hollow fibers is fixed with a cured product of the potting agent according to any of claims 1 to 5.

*Fig.1*

EP 1 992 399 A1

# Fig.2

# *Fig.3*

(a)

200

12

(b)

300    12

12

200

Fig.4

# Fig.5

# Fig.6

## INTERNATIONAL SEARCH REPORT

| | International application No. |
|---|---|
| | PCT/JP2006/325935 |

A. CLASSIFICATION OF SUBJECT MATTER
*B01D63/00*(2006.01)i, *B01D63/02*(2006.01)i, *C09J201/00*(2006.01)i

According to International Patent Classification (IPC) or to both national classification and IPC

B. FIELDS SEARCHED

Minimum documentation searched (classification system followed by classification symbols)
B01D63/00, B01D63/02, C09J201/00

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JST7580(JDream2), JSTPlus(JDream2), CAplus(STN)

C. DOCUMENTS CONSIDERED TO BE RELEVANT

| Category* | Citation of document, with indication, where appropriate, of the relevant passages | Relevant to claim No. |
|---|---|---|
| X | US 3728425 A (The Dow Chemical Co.), 17 April, 1973 (17.04.73), Particularly, Claims; examples; column 3 11.28-51 & NL 6907054 A & DE 1925430 A & FR 2009184 A5 & GB 1227665 A & BE 733528 A | 1-7 |
| X | US 3619459 A (The Dow Chemical Co.), 09 November, 1971 (09.11.71), Particularly, Claims; examples; column 3 11.1-19 (Family: none) | 1-7 |

| [X] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April, 2007 (03.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/325935

| C (Continuation). DOCUMENTS CONSIDERED TO BE RELEVANT | | |
|---|---|---|
| Category* | Citation of document, with indication, where appropriate, of the relevant passages | Relevant to claim No. |
| X | JP 2002-346345 A (Toray Industries, Inc.), 03 December, 2002 (03.12.02), Particularly, Par. Nos. [0013] to [0015], [0018] (Family: none) | 1-7 |
| X | JP 2003-62436 A (Toray Industries, Inc.), 04 March, 2003 (04.03.03), Particularly, Par. Nos. [0027], [0031] to [0034] (Family: none) | 1-7 |
| X | JP 3-262522 A (Terumo Corp.), 22 November, 1991 (22.11.91), Particularly, page 4, upper right column to lower left column (Family: none) | 1-7 |

Form PCT/ISA/210 (continuation of second sheet) (April 2005)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63038884 A
- JP 5220357 A
- JP 2003024751 A
- JP 63030481 A
- JP 2003103146 A
- JP 63171607 A
- JP 7256063 A
- JP 6049426 A
- JP 3250655 B
- JP 2000176253 A
- JP 6061431 A
- WO 2004081109 A